# FASCICULE DE BREVET EUROPEEN

(11) **EP 0 909 667 B1**
(45) Date de publication et mention de la délivrance du brevet: **09.01.2002**
(21) Numéro de dépôt: 98203321.9
(22) Date de dépôt: 01.10.1998
(51) Int. Cl.: B60C 25/132

(54) **Dispositif auxiliaire pour le montage et le démontage d'un pneu**
Hilfsanordnung für das Montieren und Demontieren von Reifen
Auxilliary device for the mounting and removing of tyres

(30) Priorité: 14.10.1997 BE 9700819
(43) Date de publication de la demande: 21.04.1999
(73) Titulaire: du Quesne, Francis, B-2630 Aartselaar (BE)
(72) Inventeur: du Quesne, Francis, B-2630 Aartselaar (BE)
(74) Mandataire: Donné, Eddy

(56) Documents cités:
- EP-A- 0 649 763
- DE-U- 9 101 930

## Description

Cette invention concerne un dispositif auxiliaire pour le montage et le démontage d'un pneu d'une jante de roue, plus spécialement de voitures, motos, etc.

Plus particulièrement, l'invention concerne un dispositif à utiliser pour assister les opérations de montage et de démontage dans le cas de pneus très rigides, comme e.a. des pneus de taille basse.

Pour monter et démonter des pneus d'une jante il est connu d'utiliser des appareils pourvus d'une table rotative comportant des éléments de serrage de la roue, et d'une colonne avec un outil pouvant être positionné au niveau du bord supérieur de la jante et comprenant une partie pouvant recevoir un levier qui peut être introduit entre la jante et le pneu, ainsi qu'un élément de guidage pour le pneu.

Pour démonter un pneu d'une jante il est connu qu'il faut pousser le talon du pneu dans un creux circonférentiel traditionnel de la jante, après quoi ledit levier peut être introduit entre la jante et le pneu.

Certains pneus, plus particulièrement les pneus de taille basse, présentent l'inconvénient que les flancs sont très rigides et que les talons ne peuvent être poussés dans ledit creux sans l'aide d'une force additionnelle.

Un dispositif auxiliaire pour exercer une telle force additionelle est connu du document EP 0.649.763 et comprend un levier pourvu d'un élément de pression, ce levier étant amovible de sorte qu'il peut être monté sur l'un ou l'autre de deux supports, permettant ainsi que ledit élément de pression puisse prendre appui soit sur le talon et/ou flanc inférieur, soit sur le talon et/ou flanc supérieur du pneu.

Ce dispositif connu présente donc l'inconvénient qu'il faut déplacer ledit levier d'un support à l'autre selon le talon et/ou le flanc en question, ce qui est peu pratique.

L'invention envisage un dispositif qui ne présente pas cet inconvénient.

A cet effet, l'invention concerne un dispositif auxiliaire pour le montage et le démontage d'un pneu d'une roue, coopérant avec un appareil comportant une table rotative pourvue d'éléments à serrer la jante, et un outil qui peut être positionné au niveau du bord supérieur de la jante montée sur la table, ledit dispositif auxiliaire comportant un levier portant au moins un élément de pression permettant d'exercer une pression sur le talon et/ou flanc du pneu, caractérisé en ce que le levier est fixé d'une manière mobile, plus particulièrement d'une manière pivotante, à un appui fixe par rapport à l'appareil, à l'aide d'un système d'accouplement unique permettant de mouvoir le levier entre une première position dans laquelle l'élément de pression peut exercer une pression sur l'un des talons ou flancs d'un pneu entourant une jante montée sur la table de l'appareil susdit, et une deuxième position dans laquelle l'élément de pression peut exercer une pression sur l'autre talon et/ou flanc dudit pneu.

De préférence, le système d'accouplement comprend un bras pivotant fixé de manière pivotante à l'appui, ledit levier portant l'élément de pression étant accouplé à son tour de manière pivotante au bras pivotant.

Le système d'accouplement peut être construit de telle façon que l'angle de la tige par rapport à la table rotative est différent pour lesdites deux positions de levier.

Pour plus de clarté, un exemple de mise en oeuvre de l'invention est décrit ci-après à titre illustratif et non restrictif, référence étant faite aux dessins annexés, dans lesquels:

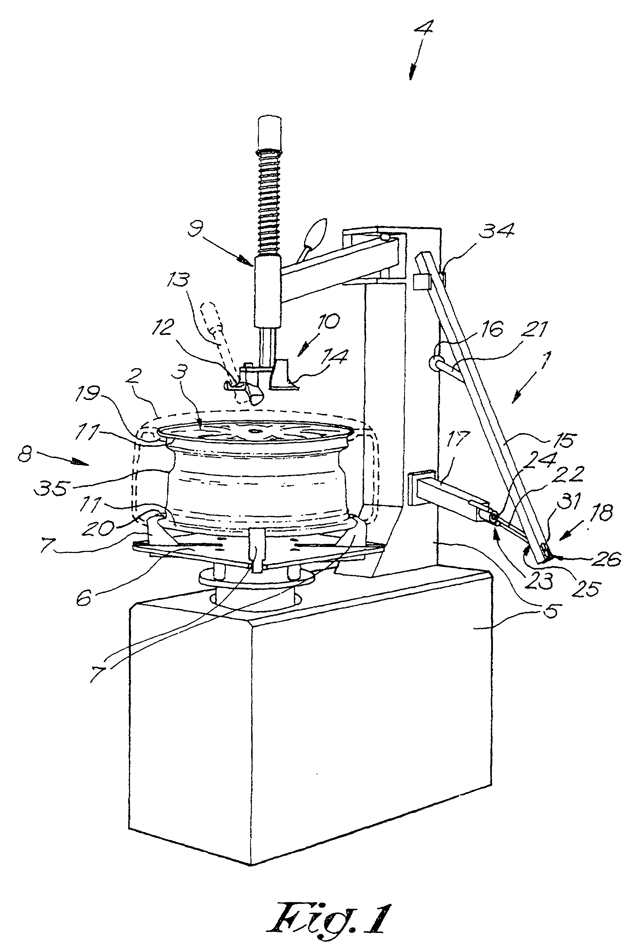

la figure 1 représente en perspective un appareil pour monter et démonter des pneus pourvu d'un dispositif selon l'invention en position de repos;

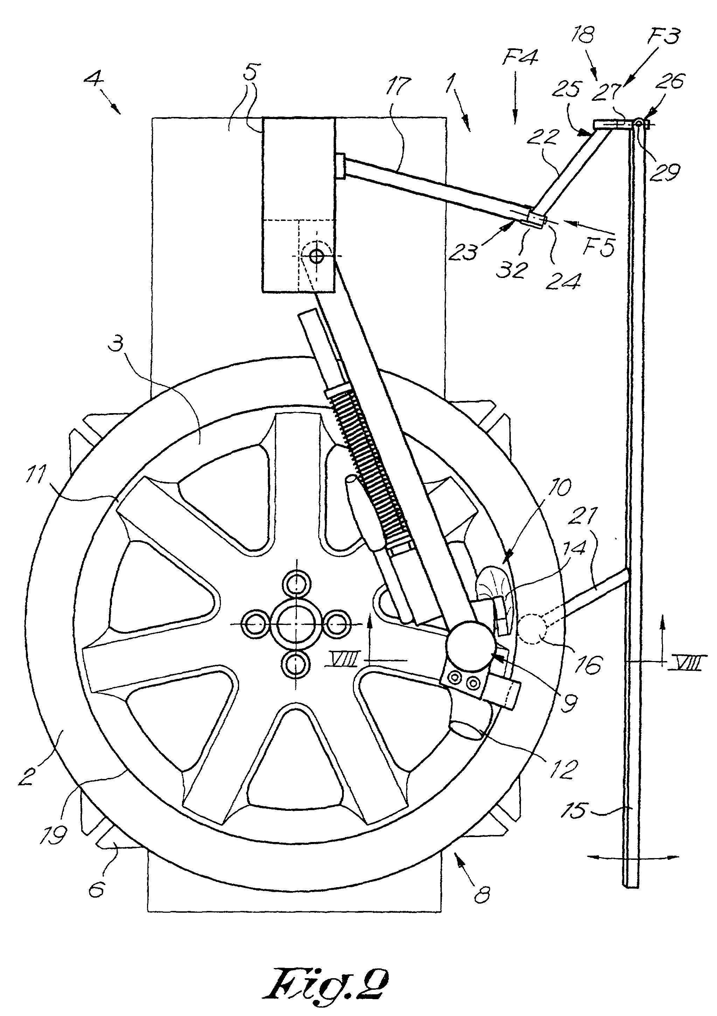

la figure 2 représente schématiquement une vue en plan de l'appareil de la figure 1, avec le dispositif selon l'invention dans la position dans laquelle il peut exercer une force sur le talon inférieur d'un pneu;

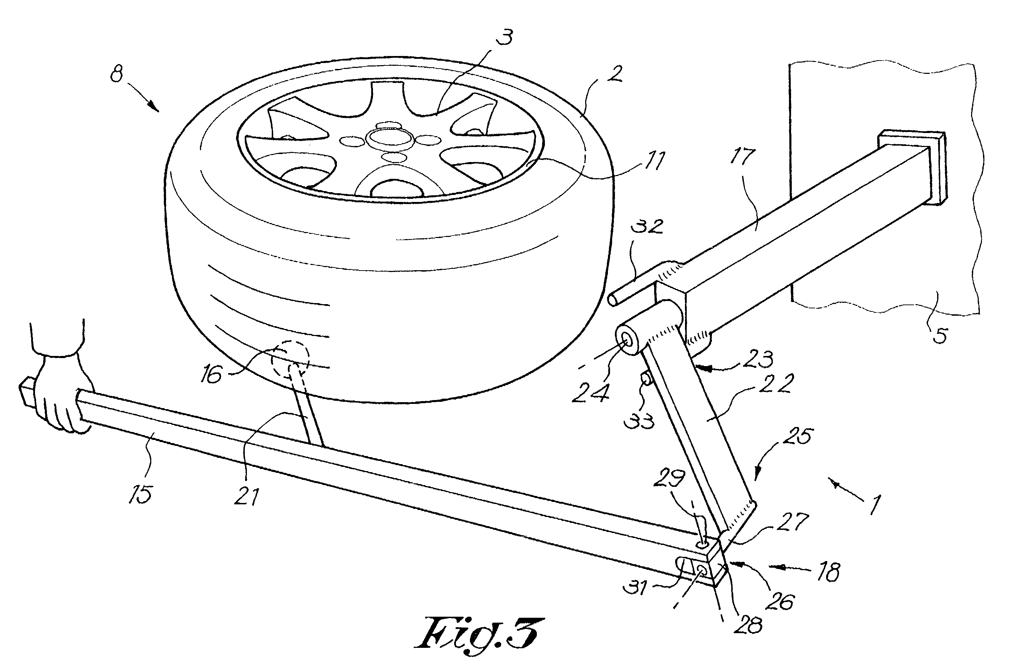

la figure 3 représente une vue en perspective suivant la flèche F3 dans la figure 2;
les figures 4 et 5 représentent des vues suivant des flèches F4 et F5 dans la figure 2;
la figure 6 est une vue analogue à celle de la figure 2, le dispositif selon l'invention étant représenté dans la position dans laquelle il peut exercer une force sur le talon supérieur d'un pneu;
la figure 7 représente une coupe selon la ligne VII-VII de la figure 6;
la figure 8 est une coupe selon la ligne VIII-VIII de la figure 2.

L'invention concerne un dispositif auxiliaire 1 pour assister au montage d'un pneu 2 sur une jante 3 ou au démontage d'un pneu 2 d'une jante 3, ce dispositif 1 coopérant avec un appareil 4 traditionnel pour le montage et le démontage de pneus.

Cet appareil 4 consiste principalement en un bâti 5; une table rotative 6 montée sur ce bâti 5, pourvue d'éléments de serrage 7, plus particulièrement des griffes, permettant de fixer la jante 3 d'une roue 8 sur cette table 6; et une colonne 9 portant un outil 10 pouvant être positionné au niveau du bord supérieur 11 de la jante 3, cet outil 10 comportant de manière connue une partie 12 pour recevoir un levier 13 pouvant être introduit entre le bord supérieur 11 et le pneu 2 et un élément de guidage 14 pour le pneu 2.

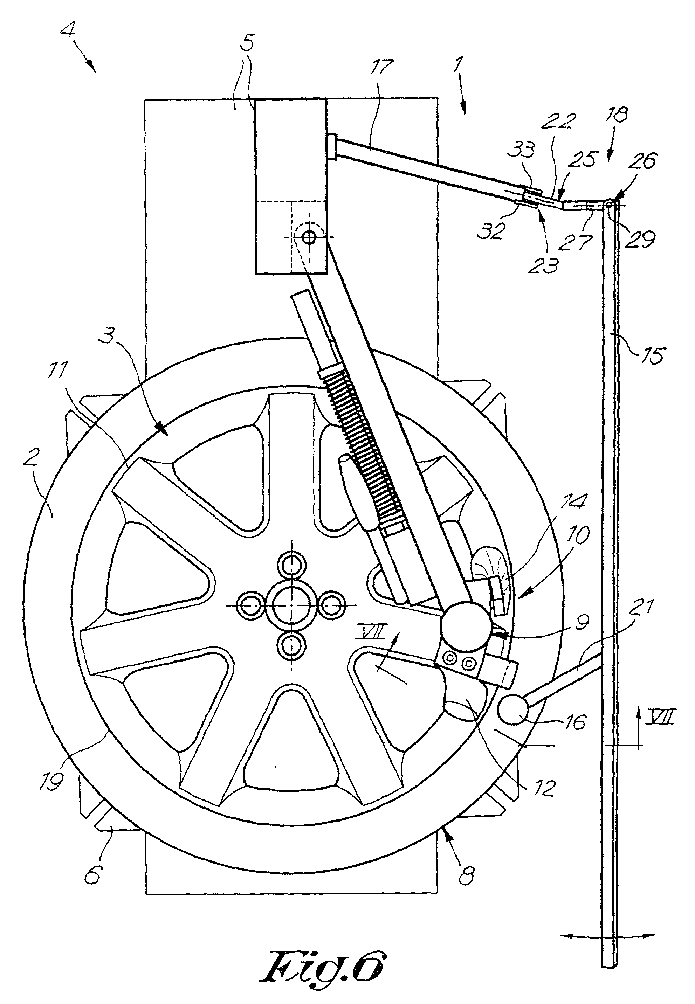

Le dispositif 1 est substantiellement constitué par un levier 15 portant un élément de pression 16, ce levier 15 étant fixé d'une manière pivotante à un appui 17 qui est fixé au bâti 5 de l'appareil 4 à l'aide d'un système d'accouplement 18 unique permettant de mouvoir le levier 15 entre deux positions, c'est-à-dire une première position dans laquelle l'élément de pression 16 peut exercer une pression sur le talon 19 supérieur du pneu 2 entourant la jante 3 montée sur la table 6 tel que représenté aux figures 6 et 7 et une deuxième position dans laquelle l'élément de pression 16 peut exercer une pression sur le talon 20 inférieur dudit pneu 2.

L'élément de pression 16 est une sphère fixée dans un point intermédiaire au levier 15 à l'aide d'une tige 21.

Ledit appui 17 est constitué par un bras fixe horizontal dirigé obliquement vers l'avant.

Le système d'accouplement 18 est constitué dans l'exemple décrit par un bras pivotant 22, dont une extrémité 23 est fixée d'une manière rotative autour d'un axe 24 situé à l'extrémité libre de l'appui 17 dans le prolongement de cet appui 17, le levier 15 étant accouplé à l'autre extrémité 25 du bras pivotant 22 au moyen d'un accouplement articulé 26.

L'accouplement articulé 26 comprend deux axes de rotation, un premier axe étant formé par une broche 27 fixée à l'extrémité du bras pivotant 22 et rotative dans un élément 28 portant sur deux faces opposées un téton 29 ou 30, ces tétons 29-30 formant le deuxième axe et étant articulés dans la fourche 31 pourvue à cet effet à l'extrémité du levier 15.

L'axe formé par la broche 27 n'est pas parallèle à l'axe horizontal 24 mais sous un angle par rapport au plan de rotation du bras pivotant 22. L'axe formé par les tétons 29-30 est pratiquement perpendiculaire à l'axe susdit.

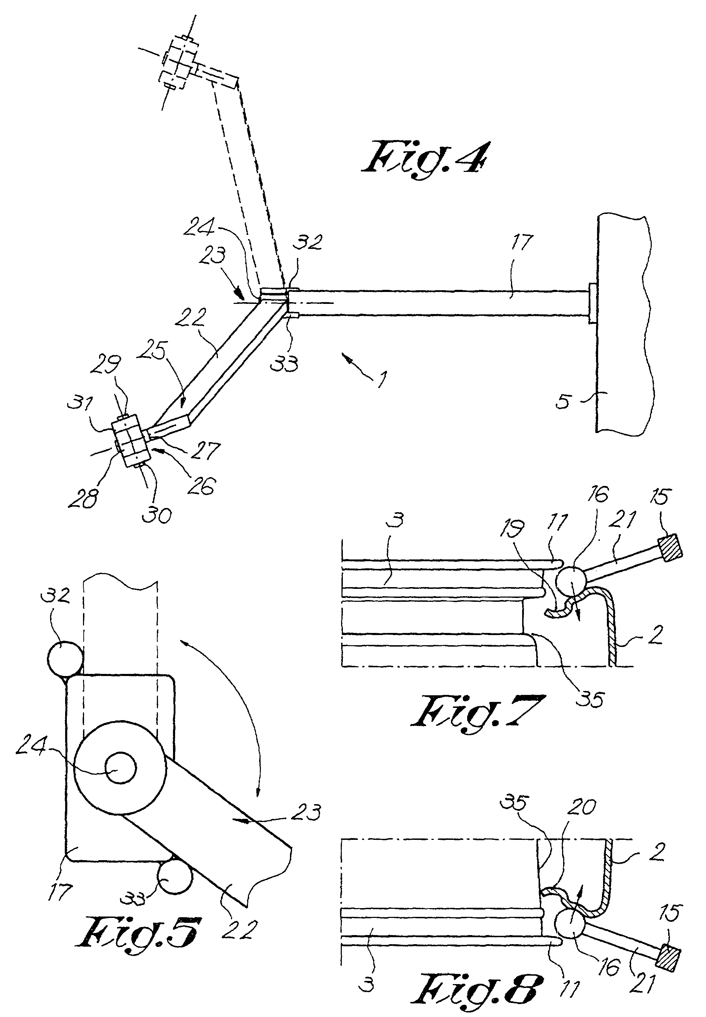

L'extrémité libre de l'appui 17 présente deux arrêts 32-33 sous forme de tiges pour le bras pivotant 22, ces arrêts 32-33 étant positionnés de manière à limiter le mouvement du bras pivotant 22 sur un angle entre 90 et 180 degrés et notamment entre une position dans laquelle ce dernier est dirigé vers le haut, tel que représenté en traits interrompus aux figures 4 et 5 et une position dans lequel il est dirigé obliquement vers le bas, tel que représenté en traits pleins.

Il est à noter que l'extrémité de la broche 27 portant l'élément 28 est inclinée vers le bas, tandis que la tige 21 est dirigée vers le haut à partir du levier 15, lorsque le bras pivotant 22 est en contact avec l'arrêt 33. Cette broche 27 est inclinée vers le haut et la tige 21 vers le bas, lorsque le bras pivotant 22 est en contact avec l'arrêt 32.

En plus, l'élément de pression 16 est localisé plus en avant ou plus en arrière selon que le bras pivotant 22 est en contact avec l'arrêt 32 ou 33. Ainsi l'élément de pression 16 peut agir sur le talon inférieur 20 à un endroit optimal, tandis que l'élément de pression 16 peut agir sur le talon supérieur 19 sans gêner l'utilisation de l'outil 10.

Dans la position de repos le levier 15 est basculé vers le haut et son extrémité supérieur repose dans un siège en U 34 fixé au bâti 5.

Pour démonter un pneu 2 de la jante 3 d'une roue 8, on fixe cette jante 3 sur la table rotative 6.

Premièrement on prend le levier 15 en main et on pivote le bras pivotant 22 contre l'arrêt 32 et on pose l'élément de pression 16 sur le talon supérieur 19 et on pousse cet élément vers le bas, comme représenté dans les figures 6 et 7, ce qui a pour effet que le talon 19 est poussé dans le creux circonférentiel 35 de la jante 3.

En même temps on utilise l'outil 10 et le levier 13 de manière connue ce qui est rendu plus facile par le fait que le talon 19 est poussé à l'aide de l'élément de pression 16.

Le dispositif 1 et en particulier l'élément de pression 16 sont utilisés de manière similaire lors du montage d'un pneu 2.

Dans une variante non représentée aux figures, le levier 15 porte deux éléments de pression, une des éléments de pression pouvant exercer une pression sur le talon 19 pour une position du levier 15, l'autre élément de pression pouvant exercer une pression sur l'autre talon 20 pour l'autre position du levier 15.

Au lieu de pousser sur un talon 19 ou 20, l'élément de pression 16 peut éventuellement pousser sur un flanc du pneu 2.

Il est évident que de nombreuses modifications peuvent être apportées à l'exemple décrit ci-dessus, sans pour autant sortir du cadre de l'invention tel que défini par les revendications suivantes.

## Revendications

1. Dispositif auxiliaire pour le montage et le démontage d'un pneu (2) d'une roue (8), coopérant avec un appareil (4) comportant une table rotative (6) pourvue d'éléments (7) à serrer la jante (3) de la roue (8), et un outil (10) qui peut être positionné au niveau du bord supérieur de la jante (3) montée sur la table (6), ledit dispositif auxiliaire comportant un levier (15) portant au moins un élément de pression (16) permettant d'exercer une pression sur le talon (19-20) et/ou flanc du pneu (2), **caractérisé en ce que** le levier (15) est fixé d'une manière mobile, plus particulièrement d'une manière pivotante, à un appui (17) fixe par rapport à l'appareil (4), à l'aide d'un système d'accouplement unique (18) permettant de mouvoir le levier (15) entre une première position dans laquelle. l'élément de pression (16) peut exercer une pression sur l'un des talons (19-20) ou flancs d'un pneu (2) entourant une jante (3) montée sur la table (6) de l'appareil (4) susdit, et une deuxième position dans laquelle l'élément de pression (16) peut exercer une pression sur l'autre talon et/ou flanc dudit pneu (2).

2. Dispositif selon la revendication 1, **caractérisé en ce que** l'élément de pression (16) est monté à un point intermédiaire sur le levier (15) à l'aide d'une tige (21).

3. Dispositif selon la revendication 1 ou 2, **caractérisé en ce que** le système d'accouplement (18) comprend un bras pivotant (22) fixé de manière pivotante à l'appui (17), ledit levier (15) portant l'élément de pression (16) étant accouplé à son tour de manière pivotante au bras pivotant (22).

4. Dispositif selon la revendication 3, **caractérisé en ce que** le levier (15) est accouplé au bras pivotant (22) au moyen d'un accouplement articulé (26).

5. Dispositif selon l'une quelconque des revendications 3 à 4, **caractérisé en ce qu'**il est pourvu de deux arrêts (32-33) limitant le mouvement de bras pivotant (22) entre deux positions, une position dans laquelle le bras pivotant (22) est dirigé vers le haut et une position dans laquelle le bras pivotant (22) est dirigé obliquement vers le bas.

6. Dispositif selon la revendication 5, **caractérisé en ce que** les arrêts (32-33) sont situés de telle manière que l'élément de pression (16) est localisé différemment au contour défini par le talon (19-20) selon que le bras pivotant (22) est en l'une ou l'autre des positions susdites, afin de ne pas gêner l'utilisation de l'outil (10).

7. Dispositif selon la revendication 2, **caractérisé en ce que** le système d'accouplement (18) est construit de telle façon que l'angle de la tige (21) par rapport à la table rotative (6) est différent pour lesdites deux positions de levier (15).

8. Dispositif selon la revendication 2 et l'une quelconque des revendications 3 à 6, **caractérisé en ce que** le levier (15) portant l'élément de pression (16) est accouplé au bras pivotant (22) de manière pivotante autour d'un axe de rotation situé sous un angle par rapport au plan de rotation du bras pivotant (22).

9. Dispositif selon l'une ou l'autre des revendications précédentes, **caractérisé en ce que** le levier (15) porte deux éléments de pression, une des éléments de pression pouvant exercer une pression sur un talon (19) ou flanc pour une position du levier (15), l'autre élément de pression pouvant exercer une pression sur l'autre talon (20) ou flanc pour l'autre position du levier (15).

## Patentansprüche

1. Hilfsvorrichtung für das Montieren und Demontieren eines Reifens (2) eines Rades (8), welche mit einem Gerät (4) zusammenwirkt, das einen Drehtisch (6) enthält, der mit Elementen (7) zum Spannen der Felge (3) des Reifens (8) versehen ist, und ein Werkzeug (10), das in Höhe des oberen Randes der auf dem Tisch (6) montierten Felge (3) positioniert werden kann, wobei besagte Hilfsvorrichtung einen Hebel (15) umfasst, der zumindest ein Presselement (16) trägt, das das Ausüben eines Drucks auf den Wulst (19-20) und/oder die Flanke des Reifens (2) gestattet, **dadurch gekennzeichnet, dass** der Hebel (15) bewegbar, spezieller schwenkbar, an einer in Bezug zu dem Gerät (4) festen Stütze (17) befestigt ist, mit Hilfe eines einzigen Verbindungssystems (18), das das Bewegen des Hebels (15) zwischen einer ersten Position, worin das Presselement (16) einen Druck auf einen der Wülste (19-20) oder Flanken eines Reifens (2), der eine auf dem Tisch (6) des besagten Geräts (4) montierte Felge (3) umgibt, ausüben kann, und einer zweiten Position, worin das Presselement (16) einen Druck auf den anderen Wulst und/oder die andere Flanke besagten Reifens (2) ausüben kann, gestattet.

2. Vorrichtung gemäß Anspruch 1, **dadurch gekennzeichnet, dass** das Presselement (16) mit Hilfe eines Schafts (21) an einem zwischenliegenden Punkt auf dem Hebel (15) montiert ist.

3. Vorrichtung gemäß Anspruch 1 oder 2, **dadurch gekennzeichnet, dass** das Verbindungssystem (19) einen Schwenkarm (22) umfasst, der schwenkbar an der Stütze (17) befestigt ist, wobei besagter Hebel (15), der das Presselement (16) trägt, seinerseits schwenkbar mit dem Schwenkarm (22) verbunden ist.

4. Vorrichtung gemäß Anspruch 3, **dadurch gekennzeichnet, dass** der Hebel (15) mittels einer Gelenkverbindung (26) mit dem Schwenkarm (22) verbunden ist.

5. Vorrichtung gemäß einem der Ansprüche 3 bis 4, **dadurch gekennzeichnet, dass** sie mit zwei Anschlägen (32-33) versehen ist, die die Bewegung des Schwenkarms (22) zwischen zwei Positionen begrenzen, einer Position, worin der Schwenkarm (22) nach oben gerichtet ist, und einer Position, worin der Schwenkarm (22) schräg nach unten gerichtet ist.

6. Vorrichtung gemäß Anspruch 5, **dadurch gekennzeichnet, dass** die Anschläge (32-33) derart angeordnet sind, dass das Presselement (16) sich an verschiedenen Stellen an dem durch den Wulst (19-20) definierten Umriß befindet, je nachdem, ob der Schwenkarm (22) sich in der einen oder der anderen der besagten Positionen befindet, sodass die Anwendung des Werkzeugs (10) nicht behindert wird.

7. Vorrichtung gemäß Anspruch 2, **dadurch gekennzeichnet, dass** das Verbindungssystem (18) derart konstruiert ist, dass der Winkel des Schafts (21) in Bezug zum Drehtisch (6) für die besagten zwei Positionen des Hebels (15) unterschiedlich ist.

8. Vorrichtung gemäß Anspruch 2 und einem der Ansprüche 3 bis 6, **dadurch gekennzeichnet, dass** der Hebel (15), der das Presselement (16) trägt, schwenkbar um eine Rotationsachse, die in Bezug zur Rotationsebene des Schwenkarms (22) unter einem Winkel angeordnet ist, mit diesem Schwenkarm (22) verbunden ist.

9. Vorrichtung gemäß einem der vorgenannten Ansprüche, **dadurch gekennzeichnet, dass** der Hebel (15) zwei Presselemente trägt, wobei eines der Presselemente für eine Position des Hebels einen Druck auf einen Wulst (19) oder eine Flanke ausüben kann und das andere Presselement für die andere Position des Hebels (15) einen Druck auf den anderen Wulst (20) oder die andere Flanke ausüben kann.

## Claims

1. Auxiliary device for mounting and dismounting a tyre (2) of a wheel (8), cooperating with an apparatus (4) comprising a turntable (6) provided with elements (7) for clamping the rim (3) of the wheel (8), and a tool (10) which can be positioned at the height of the upper edge of the wheel rim (3) mounted on the table (6), whereby said auxiliary device comprises a lever (15) carrying at least one pressing element (16) allowing to exert a pressure onto the bead (19-20) and/or the flank of the tyre (2), **characterized in that** the lever (15), by means of a single coupling system (18), is movably, more particularly, pivotably mounted at a support (17) which is fixed in respect to the apparatus (4), which coupling system allows to move the lever (15) between a first position, in which the pressing element (16) can exert a pressure onto one of the beads (19-20) or flanks of a tyre (2) surrounding a wheel rim (3) mounted on the table (6) of said apparatus (4), and a second position, in which the pressing element (16) can exert a pressure onto the other bead and/or flank of said tyre (2).

2. Device according to claim 1, **characterized in that** the pressing element (16), by means of a shaft (21), is mounted at an intermediate point at the lever (15).

3. Device according to claim 1 or 2, **characterized in that** the coupling system (18) comprises a swivel arm (22) which is pivotably fixed at the support (17), whereby said lever (15) carrying the pressing element (16), in its turn is connected to the swivel arm (22) in a pivotable manner.

4. Device according to claim 3, **characterized in that** the lever (15) is connected to the swivel arm (22) by means of an articulated coupling (26).

5. Device according to any of claims 3 to 4, **characterized in that** it is provided with two stops (32-33) limiting the movement of the swivel arm (22) between two positions, one position in which the swivel arm (22) is directed upward, and a position in which the swivel arm (22) is directed downward in an inclined manner.

6. Device according to claim 5, **characterized in that** the stops (32-33) are arranged such that the pressing element (16) is located at different locations along the contour defined by the bead (19-20) when the swivel arm (22) is situated in one or the other of said positions, in order not to hamper the utilization of tool (10).

7. Device according to claim 2, **characterized in that** the coupling system (18) is constructed such that the angle of the shaft (21) in respect to the turntable (6) is different for said two positions of the lever (15).

8. Device according to claim 2 and any of the claims 3 to 6, **characterized in that** the lever (15) carrying the pressing element (16) is connected to the swivel arm (22) pivotably around an axis of rotation situated at an angle in respect to the plane of rotation of this swivel arm (22).

9. Device according to any of the preceding claims, **characterized in that** the lever (15) carries two pressing elements, whereby one of the pressing elements can exert a pressure onto a bead (19) or flank for one position of the lever (15), and the other pressing element can exert a pressure onto the other bead (20) or flank for the other position of the lever (15).
